# EUROPEAN PATENT SPECIFICATION

(11) **EP 2 802 686 B1**
(45) Date of publication and mention of the grant of the patent: **22.03.2017**
(21) Application number: 13736212.5
(22) Date of filing: 11.01.2013
(51) Int. Cl.: C25C 3/08

(54) **ALUMINIUM ELECTROLYSIS CELL COMPRISING SIDEWALL TEMPERATURE CONTROL SYSTEM**
ALUMINIUMELEKTROLYSEZELLE MIT SEITENWANDTEMPERATURREGELUNGSSYSTEM
CELLULE D'ÉLECTROLYSE POUR LA PRODUCTION D'ALUMINIUM COMPRENANT UN SYSTÈME DE RÉGULATION DE LA TEMPÉRATURE DES PAROIS LATÉRALES

(30) Priority: 12.01.2012 NO 20120031
(43) Date of publication of application: 19.11.2014
(73) Proprietor: Goodtech Recovery Technology AS, 1065 Oslo (NO)
(72) Inventor: SEDLAK, Veroslav, N-1065 Oslo (NO); FETCU, Dumitru, R-1065 Oslo (RO)
(74) Representative: Acapo AS
(86) International application number: PCT/NO2013/050008
(87) International publication number: WO 2013/105867

(56) References cited:
- EP-A2- 0 047 227
- EP-A2- 0 047 227
- WO-A1-01/94667
- WO-A1-01/94667
- WO-A1-2006/053372
- WO-A1-2006/053372
- WO-A1-2008/014042
- WO-A1-2008/014042
- FR-A1- 2 893 329
- GB-A- 2 076 428
- GB-A- 2 076 428
- US-A1- 2008 271 996

## Description

### Background of the Invention

### Technical Field

The invention relates to heat regulation in general and particularly improved method and system for cooling over a large area, suitable for use for control of layer formation over an extended area in an aluminium electrolysis cell and exploitation of heat.

### Background Art

During production of aluminium with electrolysis technology of today based on so called Hall-Héroult cells, the operations of the cells depend on the formation and maintenance of a protective layer of frozen electrolyte in the side walls of the cell. This frozen bath is called side layer and protects the side lining of the cells against chemical and mechanical wear, and is an essential condition for achieving long lifetime of the cells. The crystallized bath operates simultaneously as a buffer for the cell with regards of changes in the heat balance. During operations the heat generation and the heat balance of the cell will vary due to unwanted disturbances of the operation (changes in bath acidity, changes in alumina concentration, changes in interpolar distances, etc.) and desired activities of the cells (metal tapping, change of anode, fire, etc.). This causes the thickness of the layer of the periphery of the cell to change and in some cases the layer will disappear entirely in parts of the periphery. Then the side lining will be exposed to the electrolyte and metal, which in combination with oxidizing gasses will lead to corrosion of the side lining materials causing these to erode. During operations over time run outs in the side can result from such repeated occurrences. It is therefore of importance to control formation of layer and layer stability in Hall-Héroult cells. For Hall-Héroult cells with high current densities model calculations show that it will be difficult to maintain the side layer of the cell due to large heat generation. For such cells and for traditional cells with heat balance problems it will therefore be a condition for a long life cell that one is able to maintain the layer protecting the side lining.

During production of aluminium in accordance with Hall-Héroult principle, this takes place at present with relatively high use of energy as measured in kilo watt hours per kilo aluminium. The heat generation of the electrolysis cells takes place as a result of ohmic voltage drops in the cell, for instance in current feeds, produced metal and particularly in the electrolyte. Approximately 55 % of input energy to the electrolysis cell is used for heat generation in the cell. Data from literature indicates that approximately 40 % of the total heat loss from the cells is through the side lining. Due to the high heat loss and the protecting frozen layer in the side lining it is a preferable place to place elements for heat regeneration in this area of the cell.

There is a need for optimizing control of layer formation and heat regeneration. In order to optimize both of these objectives at the same time it is important that heat regeneration takes place as close to the formed side layer as possible. This will lead to the control of and speed on layer formation is as fast as possible, and that temperature difference between input and output cooling medium is as large as possible. The latter is preferable for exploitation/regeneration of energy.

Furthermore, due to the large scale of electrolysis cells, it is also desirable to control said layer formation over an extended area since loss of layer formation over a small area can be damaging. The traditional method of removing heat was to use air convection over the entire surface area of the cell, resulting in limited potential for exploitation of the removed heat.

From the known art it is referred to granted patent NO 318012, corresponding to WO/2004/083489. This describes a side lining formed with hollows for flow-through of a cooling medium. The manufacturing process of this, however, is complex and requires the side linings to be moulded with hollows formed preferably before the material is sintered.

From the known art it is also referred to patent application NO 20101321, brought into the PCT-phase as PCT/NO2011/000263, of the present applicant. This describes a system for control of layer formation in an aluminium electrolysis cell and exploitation of heat comprising side lining provided with at least one hollow for heat transfer and at least one heat tube, characterized in that the heat tube is provided by the hollow and that the hollow is at least one canal provided along the surface of the side lining. The manufacturing process of this, however, is complex and requires providing the side linings with a large number of heat tubes, typically heat pipes, along the surface of the side lining, each requiring separate cooling.

It is also referred to flat heat pipes, also known as two-dimensional heat pipes, based on plates forming thin planar capillaries. This design is useful for heat spreaders in height sensitive applications, however as the capillaries are small and thin the total heat transfer is small. Also this design features large metal areas that are not actual parts of the capillaries, further reducing the total heat transfer. Furthermore this design is typically flat whereas some surface roughness of a side lining should be expected, leading to poor thermal contact. This means that flat heat pipes are not suited for cooling a side lining.

In general it is a problem that efficient cooling over a large area requires a system having a large number of parts which in turn adds complexity and cost while also reduces overall reliability.

There is therefore a need for a method and a system overcoming the above mentioned problems.

### Summary of the Invention

### Problems to be Solved by the Invention

Therefore, a main objective of the present invention is to provide a method and system for use for control of layer formation over an extended area in an aluminium electrolysis cell and exploitation of heat.

### Means for Solving the Problems

The objective is achieved according to the invention by a system for control of layer formation in an aluminium electrolysis cell as defined in the preamble of claim 1, having the features of the characterising portion of claim 1, and a method for control of layer formation in an aluminium electrolysis cell as defined in the preamble of independent method claim 10, having the features of the characterising portion of claim 10.

The present invention attains the above-described objective by a manifold from which a plurality of hot end heat tubes extend, representing the hot end or ends, wherein the cold end or condenser can be provided inside the manifold or can extend outside the manifold.

### Effects of the Invention

The technical differences over prior art is that the present invention comprises a manifold from which a plurality of hot end heat tubes extend, representing the hot end or ends, wherein the cold end or condenser can be provided inside the manifold or can extend outside the manifold. Combinations using at least one condenser inside the manifold and/or at least one condensation unit outside the cold end can also be envisaged.

The technical effect of the manifold is to collect vapour phase working fluid from the heat tubes and bring this to the at least one condenser, as well as distributing the liquid phase fluid to at least one heat tube.

These effects provide in turn several further advantageous effects:
- it makes it possible to provide a convenient solution having few parts for cooling a large area,
- it provides the possibility of interleaving a plurality of forked heat tubes, permitting repair or replacement of one unit while other units are operating, thus permitting uninterrupted operations, and
- it provides greatly simplified installation and connection in that a forked heat tube requires far fewer cooling units for the cold ends than the number of hot ends.

It should be noted that the present invention differs from other heat tube solutions such as circulating heat pipes where fluid in vapour phase flows in separate tubes from tubes conducting fluid in liquid phase, thus adding extra tubes and further complexity. In contrast, in the present invention there is a two phase flow where the two phases flow substantially in opposite directions.

Also it should be noted that the present invention differs from heat pipes used for solar heating, typically on roofs, in that these use separate and individual heat pipes that are connected to a very different type manifold. Since this connection uses conductive heat transfer it is far less efficient than the present invention where phase transition is used throughout the system from the hot ends through the manifold and to the cold ends.

### Brief Description of the Drawings

The invention will be further described below in connection with exemplary embodiments which are schematically shown in the drawings, wherein:
Fig. 1 shows state of the art of a Hall-Héroult cell in the form of a side lining block, and a steel shell or casing,
Fig. 2 shows a detail section of the embodiment of figure 1 together with section as seen from the side,
Fig. 3 shows state of the art of a Hall-Héroult cell in the form of a side lining block with hollows provided with heat tube, and a steel shell or casing,
Fig. 4a shows an end view of a typical embodiment of a forked heat tube inserted into a side lining block
Fig. 4b shows a front view of a typical embodiment of a forked heat tube inserted into a side lining block
Fig. 4c shows a side view of a typical embodiment of a forked heat tube inserted into a side lining block
Fig. 5a shows an end view of a forked heat tube provided with a straight artery
Fig. 5b shows an end view of a forked heat tube provided with a buckled artery
Fig. 5c shows an end view of a forked heat tube provided without an artery
Fig. 5d shows a front view of a forked heat tube provided with an artery connecting a plurality of hot ends between each heat tube
Fig. 5e shows side view of fig. 5d
Fig. 5f shows a section of detail A of a connection of fig. 5d
Fig. 5g shows a front view of a forked heat tube provided with an artery connecting a plurality of hot ends at the end of each heat tube
Fig. 5h shows side view of fig. 5g
Fig. 5i shows a section B of detail of a connection of fig. 2g
Fig. 5j shows a front view of a forked heat tube provided with an artery connecting a plurality of hot ends at the side of each heat tube
Fig. 5k shows side view of fig. 2j
Fig. 5l shows a section of detail C of a connection of fig. 2j
Fig. 6a shows an end view of a forked heat tube provided with two cold ends, each having one heat exchanger
Fig. 6b shows an end view of a forked heat tube provided with one cold end having two heat exchangers
Fig. 7a shows an end view of a typical embodiment of two interleaved forked heat tubes
Fig. 7b shows a front view of a typical embodiment of two interleaved forked heat tubes
Fig. 8a shows an end view of an embodiment of a forked heat tube with a centre fed cold end
Fig. 8b shows a front view of an embodiment of a forked heat tube with a centre fed cold end
Fig. 8c shows a side view of an embodiment of a forked heat with a centre fed cold end
Fig. 9a shows an end view of an embodiment of a forked heat tube with a condenser integrated in a manifold
Fig. 9b shows a front view of an embodiment of a forked heat tube with a condenser integrated in a manifold
Fig. 9c shows a side view of an embodiment of a forked heat tube with a condenser integrated in a manifold

### Description of the Reference Signs

The following reference numbers and signs refer to the drawings:

| | |
|---|---|
| 1 | Anode hanger |
| 2 | Anode carbon block |
| 3 | Liquid electrolyte |
| 4 | Liquid aluminium |
| 5 | Cathode carbon |
| 6 | Frozen electrolyte |
| 7 | Insulating brickwork |
| 8 | Steel shell |
| 9 | Ramming paste |
| 10 | Heat insulation |
| 11 | Side lining block |
| 12 | Heat tube |
| 13 | Condensation unit for heat tube |
| 14 | Condensation fins |
| 15 | Thermal paste between side lining block and steel shell |
| 100 | Forked heat tube assembly |
| 102 | Working fluid |
| 110 | Heat tube assembly cold end |
| 120 | Condensation unit for heat tube |
| 124 | Fluid connector |
| 130 | Heat tube assembly hot end tube |
| 132 | Lower end of hot end tube |
| 140 | Artery |
| 142 | Artery joint |
| 144 | Arteriole |
| 150 | Manifold |
| 154 | Fluid connector |

### Detailed Description

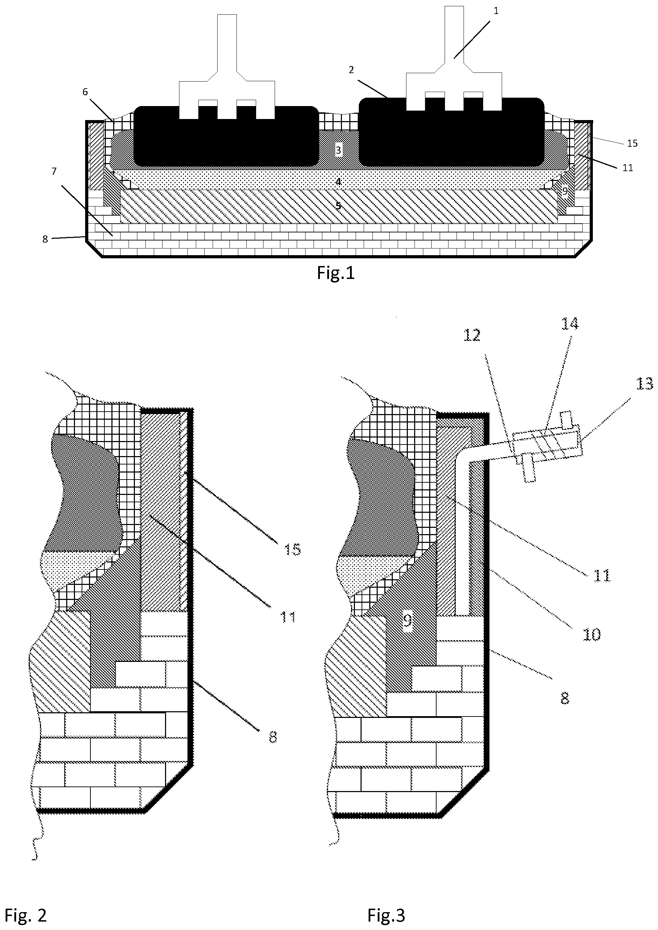

The invention will in the following be described in more details with references to the drawings showing embodiments. Fig. 1 shows state of the art of a Hall-Héroult cell in the form of a side lining block 11 and a steel shell 8 or casing. Details are shown in fig. 2. A state of the art cell using active cooling as known from previously mentioned prior art is shown in fig. 3.

With side lining one should here understand this to mean the side lining block 11, optionally in the case of state of the art together with the heat insulation 10, wherein the side lining block is optionally provided with heat tube 12. The side lining block 11 is typically a ceramic block, typically in the form of silicon carbide (SiC).

### Principles forming the basis of the invention

By heat tube 12, 100 there are two embodiments intended: "heat pipe" where a wick or other capillary effect pulls the liquid back to the hot end, and "thermosyphon" where the gravity pulls the liquid back to the hot end. The hot end is also known as the evaporation section. Both principles can be applied for this invention, though a thermosyphon it is preferred that the tube body is provided with a substantially downward inclination so that fluid in the liquid phase can run down the length of the tube. Since heat tubes of either type operate by removing heat by phase transition liquid to gas, it is preferred that the heat tube allows liquid to reach the lowest point in the heat tube.

A typical Hall-Héroult cell comprises a steel casing or shell 8, surrounding a side lining block 11. The steel casing is in good thermal contact with side lining block due to a thermal paste. The side lining block, on the opposite side from the steel casing, is in contact with the electrolyte containing aluminium (Al). By use of thermal control the heat extracted from the electrolyte builds up a layer of frozen electrolyte on the side lining, leaving the remaining part of the electrolyte 3 in the liquid phase.

Central in the invention is the realisation that a forked heat tube assembly having a plurality of hot end tubes attached to a manifold will provide a simplified system and method for removing heat from a large area compared to using a plurality of traditional heat tubes.

The manifold divides the functionalities of a traditional heat tube into two parts:
- a hot end tube where heat is absorbed by evaporation, and
- a cold end where heat is released by condensation
The manifold permits the use of a plurality of hot end tubes and/or a plurality of cold ends.

A special embodiment of a manifold is disclosed in the co-pending application titled "Manifold" by the applicant.

A specific form of a cooling member for an internal condenser relating to a manifold is disclosed in the co-pending application titled "Cooling Spiral" by the applicant.

### Best Modes of Carrying Out the Invention

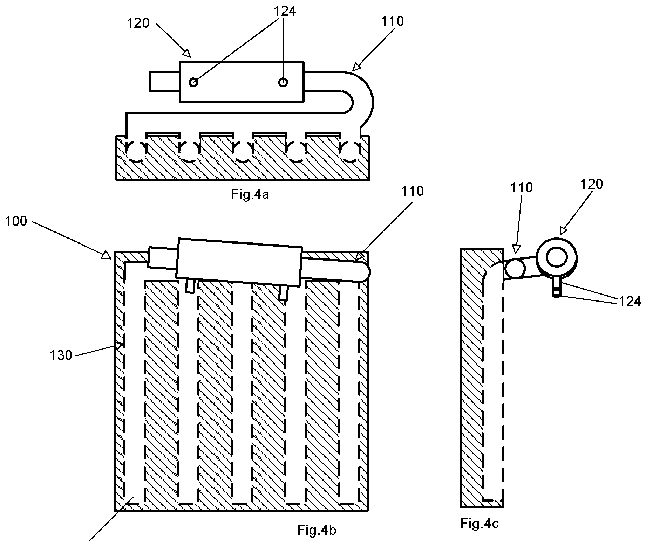

The embodiment of the apparatus according to the invention shown in Fig. 4a, 4b and 4c comprises a forked heat tube assembly 100 attached to a side lining block 11. The forked heat tube assembly 100 comprises a manifold 150 from which a plurality of hot end heat tubes extend, representing the heat tube assembly hot end 130 or ends, and a heat tube assembly cold end 110 extending outside the manifold where a condensation unit 120 is provided.

It is preferred that all hot ends are operating at similar capacity and accordingly it is important that each hot end tube receives a substantially similar amount of working fluid in the liquid phase. Typically the liquid is received directly from the manifold. To improve on the situation the hot end tubes can be provided with an artery connecting the hot end tubes, preferably at a lower end. The technical effect of this is to even out the liquid level

Fig. 4a shows an end view of a typical embodiment of a forked heat tube inserted into a side lining block

Fig. 4b shows a front view of a typical embodiment of a forked heat tube inserted into a side lining block

Fig. 4c shows a side view of a typical embodiment of a forked heat tube inserted into a side lining block

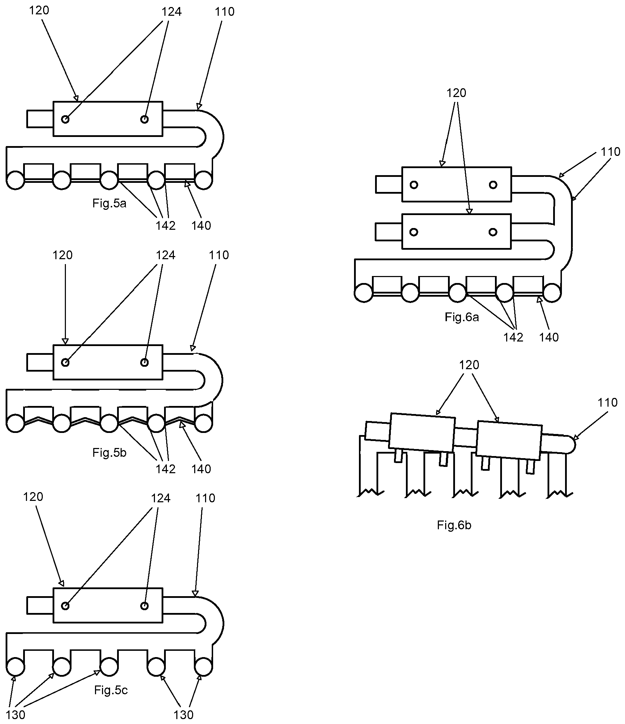

The hot ends can further be provided by an artery 140 connecting adjacent hot end tubes as indicated by fig. 5a showing an end view of a forked heat tube provided with a substantially straight artery. In order to provide some flexibility in the case of differential thermal expansion the artery 140 can be provided with buckles as shown in fig. 5b. Fig. 5c shows an embodiment without an artery. These alternatives (straight or buckled artery) can be combined with variations on how the artery is connected to the hot end tubes.

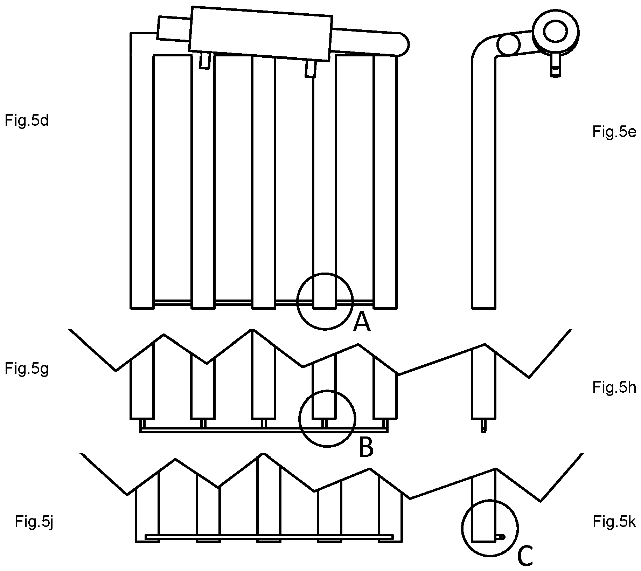

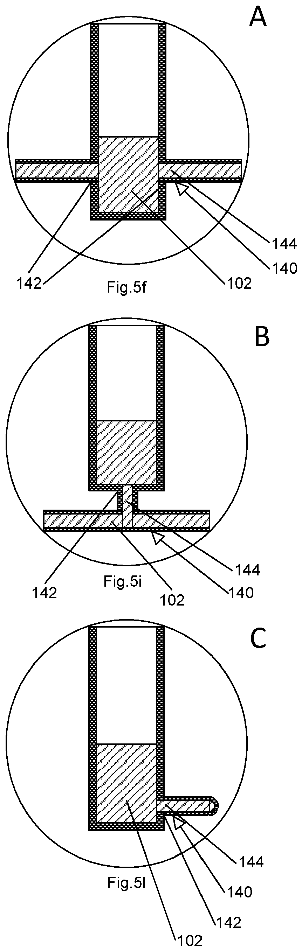

Fig. 5d shows a front view of a forked heat tube provided with an artery connecting a plurality of hot ends between each heat tube. The artery is in-line and comprises a series of smaller tubes, each connecting the two adjacent hot end tubes. Fig. 5e shows side view of fig. 5d. Provisions must be made in the side lining block to accommodate the artery if the heat tubes are provided by hollows defined in the side lining block. Fig. 5f shows a detail of a connection of fig. 5d, showing how liquid can be transferred between individual tubes to equalise the liquid level. All hot end tubes except the outermost hot end tubes are directly connected to two neighbouring heat tubes which allows for fast draining or filling of liquid. The disadvantage is the complexity of fitting an in-line artery and the many connections made to the heat tubes.

Fig. 5g shows a front view of a forked heat tube provided with an artery connecting a plurality of hot ends at the end of each heat tube. The artery 140 is a single tube connected to the hot end tubes using smaller connecting tubes called arterioles 144 that at one end are connected to the artery at an artery joint 142 and at the other end to the bottom of each respective hot end tube. Fig. 5h shows a side view of fig. 5g. Again provisions must be made in the side lining block to accommodate the artery if the heat tubes are provided by hollows defined in the side lining block. Fig. 5i shows a detail of a connection of fig. 2g, showing how liquid can be transferred between individual tubes to equalise the liquid level. All hot end tubes are connected to the artery, ensuring a more uniform filling than in the previous example where all adjustments will involve liquid transfer through possibly several hot end tubes and where the transfer rate would depend on the inclination with respect to gravity.

Fig. 5j shows a front view of a forked heat tube provided with an artery connecting a plurality of hot ends at the side of each heat tube. The artery 140 is a single tube connected to the hot end tubes using smaller connecting tubes called arterioles 144 that at one end are connected to the artery at an artery joint 142 and at the other end to the side of the lower end 132 of each respective hot end tube. Fig. 5k shows a side view of fig. 2j. Provisions must be made in the side lining block to accommodate the artery if the heat tubes are provided by hollows defined in the side lining block unless the hollows are canals provided along the surface of the side lining and shallow compared to the position of the artery. Fig. 5l shows a detail of a connection of fig. 2j, illustrating how liquid can be transferred between individual tubes to equalise the liquid level. All hot end tubes are connected to the artery, ensuring a more uniform filling than in the previous example where all adjustments will involve liquid transfer through possibly several hot end tubes and where the transfer rate would depend on the inclination with respect to gravity. The disadvantage is that the liquid level would have to extend to the level of the artery for liquid to overflow into the artery.

Cooling of the cold end could be performed as in traditional solutions using a heat exchanger on the condensation end as already shown in fig 4. Since fluid in the gas phase is collected from a plurality of hot end tubes by the manifold the amount of fluid to be condensed back to the liquid phase will be larger than for traditional heat tubes. An obvious solution is to provide the heat tube assembly with a large condensation unit. In a further aspect of the invention the cold end having one condensation unit can be replaced by two cold ends having condensation units as shown in fig. 6a. This slight increase in complexity provides the advantage of increased reliability since the two heat exchanges can be connected to separate circuits and in the case of one circuit failing the other circuit will still be operating and thus allow for continuous operations. Several geometries can be envisaged and although fig. 6a shows both cold ends being attached to the same side of the manifold one could also use both ends of the manifold.

Fig. 6b shows a different high reliability configuration where one cold end is provided with two heat exchangers. Typically each heat exchanger is connected to different cooling circuits.

Combinations with a plurality of heat exchangers on a plurality of cold ends attached to the same manifold are also possible.

During operations working fluid in the liquid phase evaporates along the length of the hot end tubes and flows as vapour towards the manifold where the vapour is collected by the manifold from all hot end tubes and brought into the cold end or ends. At the at least one cold end heat is removed by at least one condensation unit cooled typically by oil. This causes the working fluid in the vapour phase to condensate and flows as liquid towards the manifold where the liquid is distributed into the hot end tubes. It is preferred that the liquid flow is sufficient to allow liquid to reach the lower end of the heat tubes before evaporating again. An artery, if present, enables redistribution of liquid between the hot end tubes should the filling rate of the hot end tubes differ significantly.

In a traditional heat tube the vapour phase flow can exceed the speed of sound and reach a point where this flow sweeps liquid along the vapour flow and effectively reverses the normal liquid flow direction. This reduces the effective amount of working medium and thus also reduces the heat transport capacity. To avoid such a situation the flow rates must be adjusted accordingly, for instance by increasing the diameter of the tubing. This is particularly important for the manifold where the flow is the sum for a plurality of hot end tubes. Increasing the diameter is one solution, by reducing the maximum speed of the flow. Attaching cold ends to different positions along the manifold also reduces the maximum flow rate in the manifold.

The oil used for cooling the heat exchangers transports heat out of the heat tube assembly and allows for recycling of heat, for instance by raising steam for use in a steam turbine. In order to increase the overall reliability it is possible to use more than one circuit for oil. The circuits can be interleaved in such a way that if one circuit fails only a fraction of the forked heat tube assemblies stop working. Also a forked heat tube assembly can be provided with more than one heat exchanger which allows for continuous operations of all heat tube assemblies though at least some with limited capacity.

### Alternative Embodiments

A number of variations on the above can be envisaged. For instance one can envisage a manifold having a single heat tube representing a hot end and a plurality of condensers. This can be useful for high availability and reliability systems. While initially this embodiment appears compact and attractive it should be noted that it entails several complications such as the handling of coolant circuits inside the manifold. In the preferred embodiment the heat tube is defined by an unbroken surface while this integrated solution requires penetration for entry and exit of the cooling medium.

High reliability is important, as is the possibility of repairing and maintaining heat tube assemblies during operation of a cell and also the ability to avoid single points of failure in order to withstand limited problems without catastrophic failure of the operations. To that end a solution is envisaged using interleaved forked heat assemblies wherein hot ends of a first forked heat tube assembly is interleaved with hot ends of a second forked heat tube assembly. The effect of this is that in the case of a failure of one forked heat tube assembly the other forked heat tube assembly is able to take the workload and maintain the protective side layer.

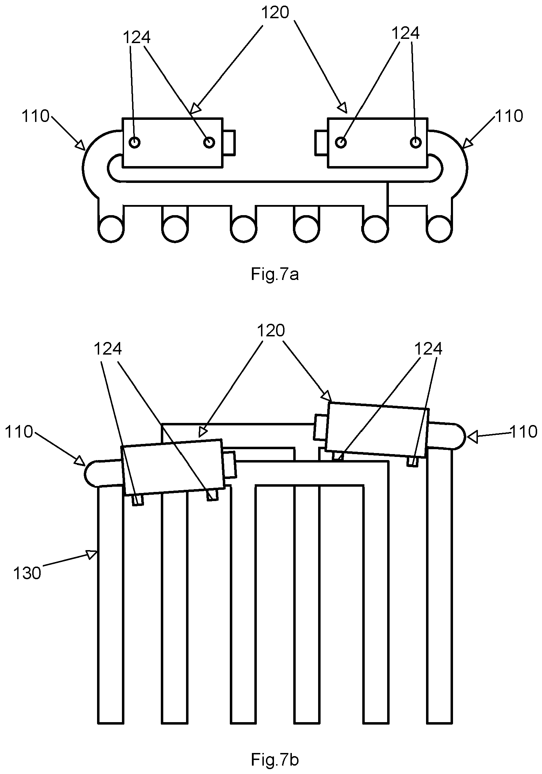

Fig. 7a shows an end view of a typical embodiment of two interleaved forked heat tubes, showing how a first, third and fifth hot end tube are connected to a first manifold and a second, fourth and sixth hot end tube are connected to a second manifold. Fig 7b shows the embodiment in a front view. In this embodiment the individual heat tube assemblies are asymmetrical in terms of length of the hot end tubes and in the connection of the cold ends to the respective manifolds. Using centre fed cold ends will improve symmetry and possibly make the two heat tube assemblies fully interchangeable, reducing cost relating to manufacture and inventory. A 3-way and higher order interleaving is also possible.

Interleaved solutions can also be provided with arteries. For ease of use it is preferred that the arteries are in different planes, for instance a first forked heat tube assembly can be provided with an in-line or end mounted artery as shown in fig. 5d and 5f respectively, and a second forked heat tube assembly can be provided with a side mounted artery as shown in fig. 5j.

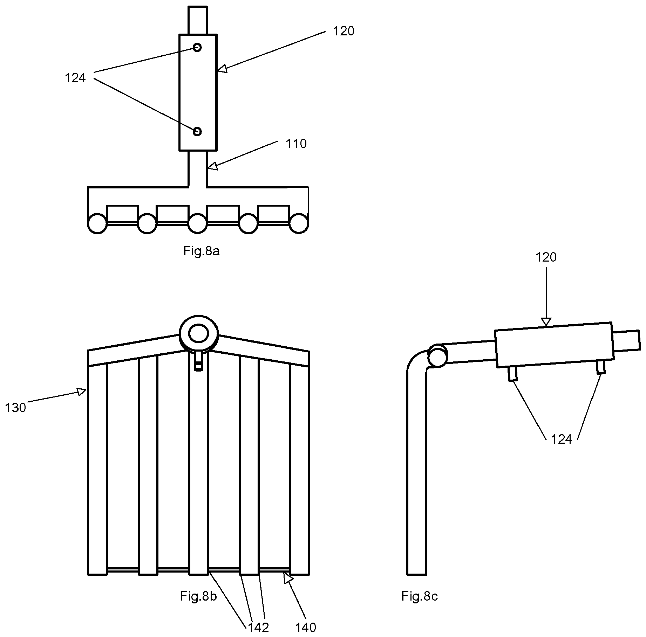

Fig. 8b shows a front view of an embodiment of a forked heat tube with a centre fed cold end. This has the advantage of reducing the flow speed in the two side branches of the manifold. A slight incline with respect to gravity is shown for the manifold; one way of ensuring working fluid in the liquid form is evenly distributed. As shown in fig. 8a and fig. 8c the cold end projects out in the direction away from the side lining block, which has the further advantage of simplifying the structure compared to previously shown embodiments where an extra bend in the cold end is indicated. Modifying the previous embodiments with outward projecting cold ends is also a possibility.

In the previously shown embodiments the condensation takes place at a cold end external to the manifold. The inventors have realised that these functions could be combined, at the cost of added complexity relating to the need to penetrate the heat tube assembly for feed through for the oil used in the cooling, which goes against the traditional teaching of heat tube design.

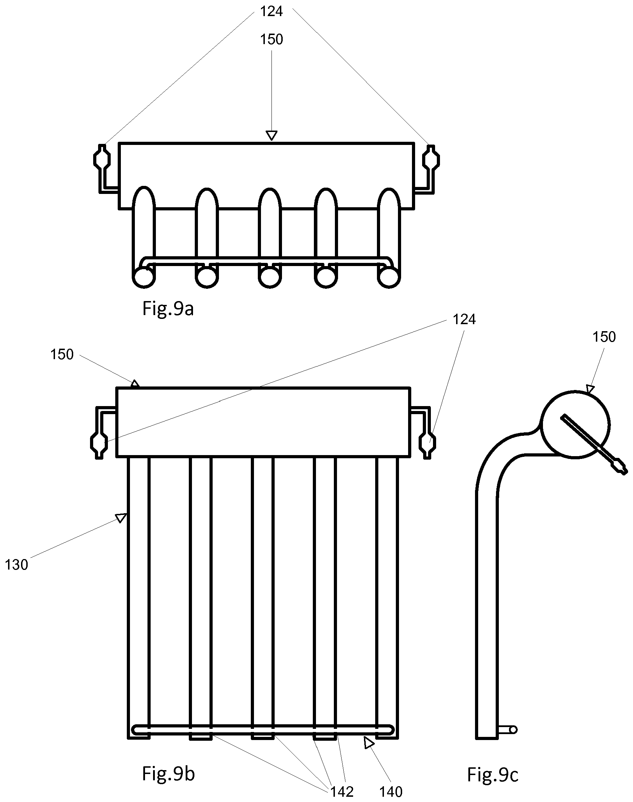

Fig. 9a shows an end view of an embodiment of a forked heat tube with a condenser integrated in a manifold having two feed through fitted with a fluid connector 154, typically for oil. The heat exchanger inside can have many different surfaces such as a blade or wing profile. For the maximum efficiency it is important that the effective surface area is maximised, for instance by using a surface like cooling fins. An advantage of an integrated manifold is that it overcomes the problem of increase of flow speed in a manifold that aggregates the flow from each hot end tube and brings the total flow into one cold end. For an integrated manifold the flow speed can thus be kept low.

### Industrial Applicability

The invention according to the application finds use in as aluminium electrolysis cell and exploitation of the heat. More specifically it can be used with an electrolysis cell comprising a system as described above.

## Claims

1. A system called forked heat tube assembly, for control of layer formation in an aluminium electrolysis cell and exploitation of heat, said electrolysis cell comprising a side lining (11) and a shell (8);
**characterized in that** the system comprises
at least one hot end tube for absorbing heat by evaporation of a working fluid from a liquid phase to a vapour phase;
at least one cold end for condensing the working fluid from a vapour phase to a liquid phase; and
a manifold from which said at least one hot end tube extends;
wherein the manifold conducts the working fluid between the at least one hot end with the at least one cold end.

2. The system according to claim 1, wherein the at least one hot end tube is a heat pipe.

3. The system according to claim 1, wherein the at least one hot end tube is a thermosyphon.

4. The system according to claims 1 - 3, wherein the at least one cold end is external to the manifold.

5. The system according to claims 1 - 3, wherein the at least one cold end is internal to the manifold.

6. The system according to claims 1 - 5, wherein the at least one cold end is provided with more than one heat exchanger.

7. The system according to claims 1 - 6, further comprising an artery for even distribution of working fluid in the liquid form at a lower end of the at least one hot end tube.

8. The system according to claim 7, wherein the artery is buckled to provide flexibility.

9. The system according to claim 7 or 8, wherein the artery is in-line and comprises a series of smaller tubes, each connecting the two adjacent hot end tubes.

10. The system according to claim 7 or 8, wherein the artery is a single tube connected to the hot end tubes using smaller connecting tubes called arterioles 144 that at one end are connected to the artery at an artery joint 142 and at the other end to each respective hot end tube.

11. The system according to claim 10, wherein the arterioles are attached to the bottom of each respective hot end tube.

12. The system according to claim 10, wherein the arterioles are attached to the side of each respective hot end tube.

13. A method for use of a plurality of systems according to claim 6, wherein the heat exchangers are connected to a plurality of cooling circuits.

14. A method for use of a plurality of systems according to claims 1 - 10, wherein hot ends of a first forked heat tube assembly is interleaved with hot ends of a second forked heat tube assembly.

15. A method for control of layer formation in an aluminium electrolysis cell, **characterized in** conducting the heat away using said forked heat tube assembly according to claim 1.

16. An electrolysis cell comprising a heat tube assembly according to claims 1-12.

## Patentansprüche

1. System, das als gegabelte Wärmeleitungsbaugruppe bezeichnet wird, zum Steuern einer Schichtbildung in einer Aluminiumelektrolysezelle und zum Ausnutzen von Wärme, wobei die Elektrolysezelle eine Seitenverkleidung (11) und ein Gehäuse (8) umfasst;
**dadurch gekennzeichnet, dass** das System umfasst
zumindest eine wärmeendige Leitung zum Absorbieren von Wärme mittels Verdampfung eines Arbeitsfluids von einer Flüssigphase in eine Dampfphase;
zumindest ein kaltes Ende zum Kondensieren des Arbeitsfluids von einer Dampfphase zu einer Flüssigphase; und
einen Verteiler, von welchem aus sich die zumindest eine wärmeendige Leitung erstreckt; wobei der Verteiler das Arbeitsfluid zwischen dem zumindest einen warmen Ende und dem zumindest einen kalten Ende leitet.

2. System nach Anspruch 1, wobei die zumindest eine wärmeendige Leitung ein Wärmerohr ist.

3. System nach Anspruch 1, wobei die zumindest eine wärmeendige Leitung ein Thermosiphon ist.

4. System nach einem der Ansprüche 1-3, wobei das zumindest eine kalte Ende außerhalb des Verteilers ist.

5. System nach einem der Ansprüche 1-3, wobei das zumindest eine kalte Ende innerhalb des Verteilers ist.

6. System nach einem der Ansprüche 1-5, wobei das zumindest eine kalte Ende mit mehr als einem Wärmetauscher versehen ist.

7. System nach einem der Ansprüche 1-6, ferner umfassend eine Arterie für eine gleichmäßige Verteilung des Arbeitsfluids in dem flüssigen Zustand an einem unteren Ende der zumindest einen wärmeendigen Leitung.

8. System nach Anspruch 7, wobei die Arterie gekrümmt ist, um Flexibilität bereitzustellen.

9. System nach Anspruch 7 oder 8, wobei die Arterie linear ausgebildet ist und eine Mehrzahl von kleineren Leitungen, die jeweils die zwei benachbarten wärmeendigen Leitungen verbinden, umfasst.

10. System nach Anspruch 7 oder 8, wobei die Arterie eine einzige Leitung ist, die mit den wärmeendigen Leitungen unter Benutzung kleinerer Verbindungsleitungen verbunden ist, die als Arteriolen 144 bezeichnet werden, die an einem Ende mit der Arterie an einer Arterienverbindung 142 und an dem anderen Ende mit jeweils einer entsprechenden wärmeendigen Leitung verbunden sind.

11. System nach Anspruch 10, wobei die Arteriolen an der Unterseite jeder entsprechenden wärmeendigen Leitung befestigt sind.

12. System nach Anspruch 10, wobei die Arteriolen an der Seite jeder entsprechenden wärmeendigen Leitung befestigt sind.

13. Verfahren zum Benutzen einer Vielzahl von Systemen nach Anspruch 6, wobei die Wärmetauscher mit einer Vielzahl von Kühlkreisläufen verbunden sind.

14. Verfahren zum Benutzen einer Vielzahl von Systemen nach einem der Ansprüche 1-10, wobei heiße Enden einer ersten gegabelten Wärmeleitungsbaugruppe und heißen Enden einer zweiten gegabelten Wärmeleitungsbaugruppe ineinander verschränkt sind.

15. Verfahren zum Steuern einer Schichtbildung in einer Aluminiumelektrolysezelle, **gekennzeichnet durch** ein Wegleiten der Wärme unter Benutzung der gegabelten Wärmeleitungsbaugruppe nach Anspruch 1.

16. Elektrolysezelle umfassend eine Wärmeleitungsbaugruppe nach einem der Ansprüche 1-12.

## Revendications

1. Système appelé ensemble tube à chaleur en forme de fourche, pour le contrôle de la formation d'une couche dans une cellule d'électrolyse d'aluminium et d'exploitation de chaleur, ladite cellule d'électrolyse comprenant un garnissage latéral (11) et une coque (8) ; **caractérisé en ce que** le système comprend
au moins un tube d'extrémité chaude pour absorber de la chaleur par évaporation d'un fluide de travail à partir d'une phase liquide vers une phase vapeur ;
au moins une extrémité froide pour condenser le fluide de travail à partir d'une phase vapeur vers une phase liquide ; et
un distributeur à partir duquel ledit au moins un tube d'extrémité chaude se prolonge ;
dans lequel le distributeur dirige le fluide de travail entre l'au moins une extrémité chaude avec l'au moins une extrémité froide.

2. Système selon la revendication 1, dans lequel l'au moins un tube d'extrémité chaude est un caloduc.

3. Système selon la revendication 1, dans lequel l'au moins un tube d'extrémité chaude est un thermosiphon.

4. Système selon les revendications 1 à 3, dans lequel l'au moins une extrémité froide est externe au distributeur.

5. Système selon les revendications 1 à 3, dans lequel l'au moins une extrémité froide est interne au distributeur.

6. Système selon les revendications 1 à 5, dans lequel l'au moins une extrémité froide est pourvue de plus d'un échangeur de chaleur.

7. Système selon les revendications 1 à 6, comprenant en outre une artère pour la distribution uniforme du fluide de travail sous forme liquide à une extrémité inférieure de l'au moins un tube d'extrémité chaude.

8. Système selon la revendication 7, dans lequel l'artère est en boucle pour fournir de la flexibilité.

9. Système selon la revendication 7 ou 8, dans lequel l'artère est en ligne et comprend une série de tubes plus petits, chacun raccordant les deux tubes d'extrémité chaude adjacents.

10. Système selon la revendication 7 ou 8, dans lequel l'artère est un unique tube raccordé aux tubes d'extrémité chaude au moyen de tubes de raccordement plus petits appelés artérioles 144 qui, à une extrémité, sont raccordés à l'artère au niveau d'un joint d'artère 142 et, à l'autre extrémité, à chaque tube d'extrémité chaude respectif.

11. Système selon la revendication 10, dans lequel les artérioles sont fixées au fond de chaque tube d'extrémité chaude respectif.

12. Système selon la revendication 10, dans lequel les artérioles sont fixées au côté de chaque tube d'extrémité chaude respectif.

13. Méthode d'utilisation d'une pluralité de systèmes selon la revendication 6, dans laquelle les échangeurs de chaleur sont raccordés à une pluralité de circuits de refroidissement.

14. Méthode d'utilisation d'une pluralité de systèmes selon les revendications 1 à 10, dans laquelle des extrémités chaudes d'un premier ensemble tube à chaleur en forme de fourche sont entrelacées avec des extrémités chaudes d'un second ensemble tube à chaleur en forme de fourche.

15. Méthode de contrôle de la formation d'une couche dans une cellule d'électrolyse d'aluminium, **caractérisée en ce que** la chaleur est chassée au moyen dudit ensemble tube à chaleur en forme de fourche selon la revendication 1.

16. Cellule d'électrolyse comprenant un ensemble de tube à chaleur selon les revendications 1 à 12.
